# EUROPÄISCHE PATENTSCHRIFT

(11) **EP 3 320 483 B1**
(45) Veröffentlichungstag und Bekanntmachung des Hinweises auf die Patenterteilung: **15.09.2021**
(21) Anmeldenummer: 16744659.0
(22) Anmeldetag: 08.07.2016
(51) Int. Cl.: G06K 9/00, G06K 9/46

(54) **VERFAHREN ZUM STEUERN EINES ROBOTERS UND/ODER EINES AUTONOMEN FAHRERLOSEN TRANSPORTSYSTEMS**
METHOD FOR CONTROLLING A ROBOT AND/OR AN AUTONOMOUS DRIVERLESS TRANSPORT SYSTEM
PROCÉDÉ DE COMMANDE D'UN ROBOT ET/OU D'UN SYSTÈME DE TRANSPORT AUTONOME SANS CONDUCTEUR

(30) Priorität: 10.07.2015 DE 102015212932
(43) Veröffentlichungstag der Anmeldung: 16.05.2018
(73) Patentinhaber: KUKA Deutschland GmbH, 86165 Augsburg (DE)
(72) Erfinder: JOHO, Dominik, 86438 Kissing (DE); MEYER-DELIUS, Daniel, 81541 München (DE)
(74) Vertreter: Oelke, Jochen
(86) Internationale Anmeldenummer: PCT/EP2016/001174
(87) Internationale Veröffentlichungsnummer: WO 2017/008895

(56) Entgegenhaltungen:
- US-A1- 2015 015 602
- BERTRAM DROST ET AL: "Model globally, match locally: Efficient and robust 3D object recognition", 2010 IEEE CONFERENCE ON COMPUTER VISION AND PATTERN RECOGNITION (CVPR), 13-18 JUNE 2010, SAN FRANCISCO, CA, USA, IEEE, PISCATAWAY, NJ, USA, 13. Juni 2010 (2010-06-13), Seiten 998-1005, XP031725933, ISBN: 978-1-4244-6984-0 in der Anmeldung erwähnt
- FENG LU ET AL: "ROBOT POSE ESTIMATION IN UNKNOWN ENVIRONMENTS BY MATCHING 2D RANGE SCANS", PROCEEDINGS OF THE COMPUTER SOCIETY CONFERENCE ON COMPUTER VISION AND PATTERN RECOGNITION. SEATTLE, JUNE 21 - 23, 1994; [PROCEEDINGS OF THE COMPUTER SOCIETY CONFERENCE ON COMPUTER VISION AND PATTERN RECOGNITION], LOS ALAMITOS, IEEE COMP. SOC. PRESS,, 21. Juni 1994 (1994-06-21), Seiten 935-938, XP000515962, ISBN: 978-0-8186-5827-3

## Beschreibung

### Gebiet der Erfindung

Die vorliegende Erfindung betrifft ein Verfahren zum Steuern eines Roboters und/oder eines autonomen fahrerlosen Transportsystems, sowie ein entsprechendes Transportsystem.

### Technischer Hintergrund

Aus dem Stand der Technik sind eine Vielzahl von Vorrichtungen und Verfahren bekannt, um mittels Sensoren Objekte erkennen zu können. Die sensorbasierte Erkennung von Objekten kann für eine Vielzahl von Anwendungen nützlich sein. Beispielsweise können in einem Massenfertigungsprozess hergestellte Teile automatisch auf bestimmte Merkmale untersucht werden, um Fehler oder Defekte zu detektieren. Eine sensorbasierte Objekterkennung ist auch in Zusammenhang mit Manipulatoren, wie etwa Industrierobotern, nützlich, um beispielsweise ein automatisches Greifen oder Handhaben von Objekten mittels eines Manipulators zu ermöglichen. Wichtig ist eine sichere sensorbasierte Objekterkennung auch bei der Steuerung von autonomen fahrerlosen Transportsystemen. Hier kann die Objekterkennung beispielsweise zum Auffinden von Transportgütern in einem Logistikszenario verwendet werden oder um das gezielte und autonome Ansteuern von Objekten zu ermöglichen.

Aus der DE 10 2014 211 948 ist ein optisches Inspektionssystem vorbekannt, mit dem hergestellte Objekte (z.B. Bauteile) auf Fehler und Defekte hin inspiziert werden können. Zur Objekterkennung soll beispielsweise eine Kamera zum Einsatz kommen, die eine dreidimensionale Punktwolke der zu erkennenden Objekte bereitstellt. Die Punktwolke soll eine Gruppe von dreidimensionalen Punkten auf der Oberfläche eines Volumenobjekts sein, und kann beispielsweise auch aus CAD-Volumenmodellen abgeleitet werden. Um Objekte in der Umgebung erkennen zu können, werden die von der Kamera bereitgestellten dreidimensionalen Punktwolken mit vorab bekannten Punktwolke-Vorlagen verglichen, um z.B. vorab gespeicherte Objekte erkennen zu können.

Aus der Veröffentlichung "Model Globally, Match Locally: Efficient and Robust 3D Object Recognition" von Bertram Drost, et al. ist ebenfalls ein Verfahren zur sensorbasierten Erkennung von dreidimensionalen Objekten vorbekannt. Bei diesem vorbekannten Verfahren wird ebenfalls eine dreidimensionale Punktwolke erzeugt und es werden jeweils zwei Punkte auf der Oberfläche der Punktwolke zu Punktpaar-Features zusammengefasst. Die Punktpaar-Features werden aus bestimmten geometrischen Parametern der beiden ausgewählten Punkte gebildet, wie etwa der Distanz zwischen den beiden ausgewählten Punkten und der Winkel der Normalen zu der Distanzlinie zwischen den beiden Punkten. Dieses Verfahren ist jedoch relativ aufwändig, da es u.a. eine dreidimensionale Bildverarbeitung voraussetzt und eine große Anzahl an Punktpaar-Features betrachtet werden müssen. Zudem basiert die letztendliche Entscheidung, ob eine Detektionshypothese akzeptiert oder verworfen wird, alleine auf einem Voting- und Clustering-Verfahren, was für das Anwendungsszenario der vorliegenden Erfindung als nicht robust genug eingeschätzt wird.

Es ist daher eine Aufgabe der vorliegenden Erfindung, ein verbessertes Verfahren zum Steuern eines Roboters und/oder eines autonomen fahrerlosen Transportsystems bereitzustellen, mit dem ein sicheres und einfaches Erkennen von Objekten mit möglichst geringem Aufwand möglich ist, um ein geeignetes Ansteuern zu ermöglichen. Zudem wird ein neues Verfahren für die Entscheidung über Akzeptanz oder Zurückweisung einer Detektionshypothese vorgestellt. Dieses Verfahren prüft, unter Berücksichtigung von physikalischen und geometrischen Eigenschaften des Messprozesses, ob die Detektionshypothese im Einklang mit den gewonnen Messdaten steht. Weiterhin unterscheidet sich das hier vorgestellten Voting-Verfahrens vom Verfahren in vorgenannter Veröffentlichung von Drost et al.

### Inhalt der Erfindung

Die oben genannte Aufgabe wird gelöst durch ein Verfahren zum Steuern eines Roboters und/oder eines autonomen fahrerlosen Transportsystems gemäß Anspruch 1 und ein entsprechendes Transportsystems nach Anspruch 13.

Insbesondere wird die oben genannte Aufgabe gelöst durch ein Verfahren zum Steuern eines Roboters und/oder eines autonomen fahrerlosen Transportsystems bei dem eine verbesserte sensorbasierte Erkennung von Objekten zum Einsatz kommt. In einem ersten Schritt wird ein Objektmodell eines zu erkennenden Objekts in Form einer 2D-Oberflächenkontur bereitgestellt. Dies kann vorzugsweise durch eine manuelle oder automatische Verarbeitung eines CAD-Modells des zu erkennenden Objekts erfolgen. Das Objektmodell kann beispielsweise eine Menge von geometrischen Primitiven sein, etwa Kreise, Polygone, etc., die eine definierte Innen- und Außenseite besitzen. Das Objektmodell entspricht damit vorteilhaft einer Reduktion des zu erkennenden Objekts auf eine Repräsentation, welche beispielsweise von dem später zu verwendenden Sensor erkannt werden kann. Beispielsweise kann dies im Falle eines horizontal angebrachten 2D-Laserscanners ein horizontaler Schnitt durch das Objekt auf Höhe des Laserscanners sein. Zudem wird vorzugsweise für das Objektmodell des Objekts eine beliebig zu definierende Objektreferenzpose bereitgestellt, die beispielsweise aber nicht notwendigerweise dem im CAD-Modell verwendeten Koordinatenursprung mit Orientierung null entsprechen kann.

Das Objektmodell in Form einer 2D-Oberflächenkontur ist in einer Datenbank gespeichert, die beispielsweise entfernt angeordnet sein kann, oder mit einer entfernt angeordneten Datenbank synchronisiert ist, und die somit die Daten einer Vielzahl von Anwendern bzw. Anwendungen zur Verfügung stellt. Wenn das Verfahren beispielsweise im Zusammenhang mit autonomen fahrerlosen Transportsystemen zum Einsatz kommt, können die Transportsysteme bzw. die Steuereinrichtungen der Transportsysteme z.B. drahtlos auf die Datenbank zugreifen, die sich etwa in einem Rechenzentrum befindet, und die benötigten Daten abfragen. Auf diese Weise können mehrere Transportsysteme auf dieselben Daten zugreifen, was z.B. die Aktualisierung der benutzten Daten erheblich vereinfacht.

Aus dem Objektmodell wird beispielsweise eine Modellpunktwolke erstellt, indem auf der 2D-Oberflächenkontur (oder den 2D-Konturen) des Objektmodells in konfigurierbaren, regelmäßigen Abständen Punkte (Modellpunkte) platziert werden. Jeder dieser Punkte wird mit einer Oberflächennormalen assoziiert, die der Oberflächennormalen der 2D-Oberflächenkontur an dieser Stelle entspricht. Die Modellpunktwolke entspricht dieser so erstellten Menge an orientierten Punkten.

In einem weiteren Schritt werden auf Basis der Modellpunktwolke (d.h. basierend auf der 2D-Oberflächenkontur) Punktpaar-Features gebildet. Dazu wird z.B. eine Teilmenge aller möglichen Punktpaare der Modellpunkte betrachtet. Diese Teilmenge kann beispielsweise randomisiert oder systematisch ausgewählt werden. Für jedes Punktpaar dieser Teilmenge, wird ein Punktpaar-Feature **f**=(d₁₂, α₁, α₂) gebildet. Dabei basieren die Punktpaar-Features zumindest auf der Distanz d₁₂ zwischen den Punkten *P*₁ und *P*₂ eines Punktepaars und den beiden Winkeln α₁ und α₂ der Oberflächennormalen jedes der Punkte zu der Distanzlinie zwischen beiden Punkten. Je nach Komplexität des zu erkennenden Objekts können so beispielsweise mehrere 1.000 oder mehrere 10.000 Punktpaar-Features einer 2D-Oberflächenkontur gebildet werden.

Auf Basis eines Punktpaar-Features wird zudem vorzugsweise eine Feature-Pose wie folgt zugeordnet: Es wird ein Punkt M definiert, der z.B. auf der Mitte der Verbindungslinie zwischen den Punkten eines Punktpaars liegt. Weiterhin wird ein Richtungsvektor zwischen M und einem der Punkte des Punktpaars definiert. Die Positionskomponente der Feature-Pose ergibt sich als der Punkt M und die Orientierungskomponente als die Orientierung des Richtungsvektors. Weiter wird für das jeweilige Punktpaar-Feature die relative Objektpose (d.h. die Objektreferenzpose) des zu erkennenden Objekts relativ zur Feature-Pose definiert. Auf diese Weise werden die Punktpaar-Features der 2D-Oberflächenkontur des zu erkennenden Objekts (die hierin auch als "Modell-Features" bezeichnet werden) mit einer relativen Objektpose verknüpft.

Optional könnten die Modell-Features (inklusive der relativen Objektposen) auch vorberechnet sein und wie auch die 2D-Oberflächenkontur in einer Datenbank gespeichert sein, die beispielsweise entfernt angeordnet sein kann oder mit einer entfernt angeordneten Datenbank synchronisiert sein könnte.

In einem weiteren Schritt wird zumindest eine 2D-Punktwolke der Umgebung (Umgebungspunktwolke) mittels eines Distanzsensors erfasst, und entsprechende Punktpaar-Features der erfassten 2D-Punktwolke der Umgebung gebildet, d.h. die Punktpaar-Features werden analog zu den Modell-Features gebildet. Analog zu den Punktpaar-Features wird also für jeden Punkt eine Oberflächennormale geschätzt. Die Umgebungspunktwolke besteht somit z.B. aus einer Menge von orientierten Punkten. Grundsätzlich bevorzugt ist der Distanzsensor ein Laserscanner, und am meisten bevorzugt ein 2D-Laserscanner. Die so gebildeten Punktpaar-Features der 2D-Punktwolke der Umgebung werden mit den Punktpaar-Features der 2D-Oberflächenkontur (den Modell-Features) verglichen und ähnliche Punktpaar-Features bestimmt. Basierend auf den als ähnlich bestimmten Punktpaar-Features wird dann vorzugsweise anhand eines Voting-Verfahrens bestimmt, ob das zu erkennende Objekt erkannt wurde oder nicht, und der Roboters und/oder das autonome fahrerlosen Transportsystem entsprechend angesteuert, um z.B. das erkannte Objekt zu greifen oder darauf zuzufahren.

Der Schritt des Vergleichs der Punktpaar-Features weist ein Bestimmen von Posenhypothesen des zu erkennenden Objekts anhand der als ähnlich bestimmten Punktpaar-Features auf. Beispielsweise werden auf Basis der Umgebungspunktwolke, bzw. den darauf basierend gebildeten Punktpaar-Features, im Zuge eines Voting-Verfahrens Hypothesen über die Pose des zu erkennenden Objekts generiert (sogenannte Posenhypothesen).

Das Voting-Verfahren kann vorzugsweise wie folgt durchgeführt werden: in einem ersten Schritt werden Punktpaar-Features der 2D-Punktwolke der Umgebung erzeugt bzw. bestimmt, die alle von genau einem Punkt (Referenzpunkt) ausgehen. Dazu wird beispielsweise eine Teilmenge der Umgebungspunktwolke ausgewählt und jeder Punkt dieser Teilmenge nimmt als Referenzpunkt an einem Voting-Verfahren teil, um Posenhypothesen zu generieren. Der jeweilige Referenzpunkt wird dabei vorzugsweise mit anderen Punkten der Umgebungspunktwolke gepaart und für jede solche Punktpaarung wird ein Punktpaar-Feature in derselben Art und Weise berechnet wie die Punktpaar-Features der zum Vergleich dienenden Modellpunktwolke. Im Folgenden werden diese Punktpaar-Features auch als Umgebungs-Features bezeichnet. Im Gegensatz zu den Modell-Features sind die Umgebungs-Features jedoch nicht mit einer relativen Objektpose assoziiert, da die Bestimmung der Objektpose gerade das Ziel des Voting-Verfahrens ist. Hierfür werden für jedes in einem Voting-Verfahren generierte Umgebungs-Feature ähnliche Modell-Features gesucht und für jedes gefundene ähnliche Modell-Feature eine Transformation bestimmt, welche die Feature-Pose des Modell-Features auf die Feature-Pose des Umgebungs-Features abbildet. Durch die jeweilige Transformation werden die mit den Modell-Features assoziierten relativen Objektposen in diese Szene transformiert und dadurch vorläufige Posenhypothesen generiert.

Die Posenhypothesen werden dann vorzugsweise in ein Voting-Grid eingetragen. Das Voting-Grid wiederum ist eine Aufteilung des Posen-Hypothesenraums in diskrete Zellen, wobei die Zellen die in sie fallenden (vorläufigen) Posenhypothesen enthalten. Das Voting-Grid wird vorzugsweise effizient durch eine Hashtabelle realisiert, wobei der Schlüssel dem dreidimensionalen Zellenindex entspricht, der wiederum einer Diskretisierung der Posenhypothese entspricht. Sind alle vorläufigen Posenhypothesen, die vorzugsweise in diesem Schritt alle auf ein und demselben Referenzpunkt basieren, in das Voting-Grid eingetragen, wird zumindest eine vorläufige Posenhypothese aus dem Voting-Grid ausgewählt und als resultierende Posenhypothese des Voting-Verfahrens definiert. Vorzugsweise wird hierzu nur die Zelle mit den meisten Posenhypothesen betrachtet und vorzugsweise aus den in dieser Zelle enthaltenen Posen eine zufällig ausgewählt. Die anderen Posenhypothesen des Voting-Grids werden verworfen und nicht berücksichtigt. Das Voting-Grid wird daraufhin gelöscht.

Das Voting-Verfahren mittels des Voting-Grids wird vorzugsweise unabhängig für mehrere Referenzpunkte wiederholt, so dass mehrere resultierende oder wahrscheinliche Posenhypothesen ermittelt werden. Die Menge an so aufgefundenen resultierenden Posenhypothesen ist jedoch erheblich kleiner, als die Menge aller jemals in den Voting-Grids eingetragenen *vorläufigen* Posenhypothesen. Da die so ausgewählten resultierenden bzw. wahrscheinlichen Posenhypothesen durch Konsensbildung während des Voting-Verfahrens entstanden sind (z.B. jeweils ausgewählt aus der Voting-Gridzelle mit den meisten Posen), sind sie wahrscheinlichere Hypothesen, in dem Sinne, dass die tatsächliche Objektpose mit größerer Wahrscheinlichkeit in der Nähe einer resultierenden (wahrscheinlichen) Posenhypothese liegt, als an einer zufällig ausgewählten vorläufigen Posenhypothese. Durch diese Reduktion der Menge an Posenhypothesen beschleunigen sich die nachfolgenden Verarbeitungsschritte, mit denen die resultierenden Posenhypothesen vorzugsweise weiter optimiert und einer Konsistenzprüfung unterzogen werden.

In einem vorteilhaft nachfolgenden Optimierungsschritt werden die aus den jeweiligen Voting-Verfahren resultierenden Posenhypothesen verändert, mit dem Ziel, die Genauigkeit der Posenschätzung noch weiter zu erhöhen. Vorzugsweise wird dies durch ein Iterative-Closest-Point-Verfahren (ICP) realisiert, bei dem in jedem Teilschritt des Verfahrens die Punkte der Umgebungspunktwolke mit dem jeweils nächsten Punkt der in die Szene transformierten Punkte der Modellpunktwolke assoziiert werden. Dabei werden Punkte vorzugsweise nur dann assoziiert, falls die Distanz der Punkte einen gegebenen Grenzwert nicht überschreitet sowie die Winkeldifferenz zwischen den Oberflächennormalen der Punkte einen gegebenen Grenzwert nicht überschreitet. Auf Basis der so assoziierten Punkte kann durch eine Singulärwertzerlegung effizient eine neue Posenhypothese gefunden werden, welche die Summe über die quadrierten Punktdistanzen der jeweils assoziierten Punkte minimiert. Diese so bestimmte neue Posenhypothese ist der Ausgangspunkt für die nächste Iteration des ICP-Verfahrens, das bis zur Konvergenz oder dem Erreichen einer gegebenen maximalen Anzahl an Iterationsschritten für die Posenhypothese durchgeführt wird.

Im Zuge des Bestimmens ob das zu erkennende Objekt richtig erkannt wurde oder nicht, werden die resultierenden und gegebenenfalls optimierten Posenhypothesen einer Konsistenzprüfung unterzogen, um falsche Hypothesen als solche zu erkennen und auszusortieren. Die Konsistenzprüfung kann auf verschiedenen Einzelkriterien basieren, die einzeln oder auch kumulativ verwendet werden können. Es wird im Folgenden davon ausgegangen, dass das Objektmodell auf die Pose der jeweils gerade zu prüfenden Posenhypothese transformiert wurde und die Punkte der Umgebungspunktwolke mit den Punkten der transformierten 2D-Oberflächenkontur, bzw. der entsprechenden Modellpunktwolke assoziiert wurden. Dabei wird ein Umgebungspunkt mit dem nächsten Modellpunkt der 2D-Oberflächenkontur assoziiert, jedoch nur dann, falls die Distanz der Punkte und die Winkeldifferenz der Oberflächennormalen der Punkte einen jeweiligen Grenzwert nicht überschreiten.

Ein erstes Kriterium basiert auf dem Freiraummodell des Objekts, das als ein Bereich interpretiert ist, innerhalb dessen keine weiteren Objekte als das Objekt selbst zu erwarten ist. Beispielsweise könnte das Objektmodell eines Tisches aus vier Kreisen bestehen, die einen horizontalen Schnitt durch die Tischbeine auf Höhe des Distanzsensors modellieren, und das Freiraummodell könnte ein Rechteck sein, das diese vier Kreise umfasst. Wird versucht diesen Vier-Bein-Tisch zu erkennen und wird er fälschlicher Weise an einer Pose vermutet, an dem tatsächlich ein ähnlicher Tisch mit jedoch sechs Beinen steht, so würden die zusätzlichen zwei Beine zu Messungen führen, die einerseits innerhalb des Freiraummodells des Vier-Bein-Tisches liegen, die aber andererseits nicht zu Modellpunkten des Vier-Bein-Tisches assoziiert werden könnten. Das erste Kriterium basiert daher auf einem Grenzwert für die Anzahl der Punkte der Umgebungspunktwolke die sich innerhalb des Freiraummodells des Objekts befinden und die nicht mit Modellpunkten assoziiert werden konnten. Mit anderen Worten, der Sensor erfasst Punkte an Positionen, an denen keine sein dürften, wenn die Posenhypothese richtig ist. Wird dieser Grenzwert für eine gegebene Posenhypothese überschritten, so wird die Posenhypothese verworfen.

Ein weiteres Kriterium basiert auf dem Freiraummodell des Sensors, das als ein Bereich interpretiert ist, innerhalb dessen keine Hindernisse gemessen wurden. Beispielsweise könnte dies im Falle eines 2D-Laserscanners ein Polygon sein, das aus der Position des Lasersensors und den Endpunkten der Laserstrahlen besteht. Wird beispielsweise versucht ein Sechs-Bein-Tisch, der im Objektmodell aus sechs Kreisen besteht, zu erkennen und dieser fälschlicher Weise an einer Stelle vermutet an der tatsächlich ein ähnlicher Tisch mit jedoch nur vier Beinen steht, so würden Modellpunkte von zweien der Beine des Sechs-Bein-Tisches im Freiraummodell des Sensors liegen (sofern der Bereich dem Sensor nicht durch Selbstverdeckung des Objekts verborgen bleibt). Es würden also Modellpunkte an Stellen vorliegen, an denen der Sensor nichts erfasst hat. Dieses weitere Kriterium basiert daher auf einem Grenzwert für die Anzahl der Punkte der Modellpunktwolke die sich innerhalb des Freiraummodells des Sensors befinden. Wird dieser Grenzwert überschritten, so wird die Posenhypothese verworfen.

Ein weiteres Kriterium basiert ebenfalls auf dem Freiraummodell des Sensors, betrachtet aber die maximale Eindringtiefe eines Modellpunkts in das Freiraummodell des Sensors (Distanz des Punktes zur Kontur des Freiraummodells, für Punkte die innerhalb des Freiraummodells liegen). Sollte diese Distanz einen gegebenen Grenzwert überschreiten, wird die Posenhypothese verworfen.

Ein weiteres Kriterium basiert auf dem Verhältnis der Anzahl der Punkte der 2D-Oberflächenkontur (Modellpunkte) des zu erkennenden Objekts die eigentlich vom Distanzsensor erfasst werden müssten (erwartete Modellpunkte), zu den tatsächlich erfassten Punkten der 2D-Punktwolke der Umgebung (beobachtete Modellpunkte). Die erwarteten Modellpunkte können geometrisch leicht berechnet werden, da die Posenhypothese die Lage des Objektmodells (z.B. basierend auf CAD-Modell und Modellpunktwolke) relativ zur Pose des Sensors spezifiziert und andererseits die Sichtbereiche der Sensoren als mit hinreichender Genauigkeit bekannt vorausgesetzt werden können. Die erwarteten Modellpunkte umfassen also nur die aus dieser Perspektive theoretisch sichtbaren Modellpunkte, was z.B. die Punkte an der Rückseite des Modells ausschließt, ebenso wie Punkte aus Bereichen, die aufgrund von Selbstverdeckungen nicht sichtbar sind. Um die beobachteten Modellpunkte zu bestimmen, werden nun die erwarteten Modellpunkte zu Punkten der Umgebungspunktwolke assoziiert (anstatt wie bisher anders herum, die Umgebungspunkte zu den Modellpunkten), wobei wiederum maximale Punktdistanzen und Winkeldifferenzen beachtet werden. Ein erwarteter Modellpunkt ist genau dann auch ein beobachteter Modellpunkt, falls er mit einem Punkt der Umgebungspunktwolke assoziiert werden konnte. Das Verhältnis der Anzahl an beobachteten zu erwarteten Modellpunkten ist eins, falls alle erwarteten Modellpunkte beobachtet wurden, und geht gegen null, je mehr das Objekt z.B. von anderen Objekten verdeckt ist, oder je mehr das tatsächlich beobachtete Objekt vom erwarteten Objektmodell an dieser Pose abweicht. Dieses weitere Kriterium definiert daher einen Grenzwert für dieses Verhältnis und die Posenhypothese wird verworfen, falls dieser Grenzwert unterschritten wird.

Ein weiteres Kriterium basiert auf der Anzahl der beobachteten Bereiche des Objektmodells. Dazu wird das Objektmodell vom Benutzer in verschiedene Bereiche eingeteilt oder jedes geometrische Primitiv (z.B. Kreis, Polygon, etc.) des Objektmodells wird implizit als eigener Bereich aufgefasst. Bei der Erstellung der Modellpunktwolke aus dem Objektmodell wird für jeden Modellpunkt vermerkt, aus welchem Bereich er generiert wurde. Ein Bereich gilt als beobachtet, sofern mindestens ein mit ihm verknüpfter Modellpunkt ein beobachteter Modellpunkt ist, also wenn ein Punkt der erfassten 2D-Punktwolke dem Bereich zugeordnet werden kann. Dieses Kriterium definiert einen Grenzwert für die Anzahl der beobachteten Bereiche und die Posenhypothese wird verworfen, falls der Grenzwert unterschritten wird.

Wenn eine Posenhypothese nicht verworfen wurde, gilt das Objekt als an dieser Stelle detektiert. Eine akzeptierte Posenhypothese verwirft dann ähnliche Posenhypothesen, die sich innerhalb eines translatorischen und rotatorischen Toleranzbereichs um die akzeptierte Posenhypothese befinden. Die so verworfenen Posenhypothesen müssen dann nicht weiterverarbeitet werden, was die nachfolgenden Verarbeitungsschritte beschleunigt.

Das Detektionsverfahren liefert keine Pose zurück, falls das Objekt nicht erkannt wurde (z.B. weil es in der Szene tatsächlich nicht existiert) und das Verfahren kann mehrere Posen zurückliefern, falls das Objekt mehrfach in der Szene existiert. Zudem kann dasselbe physische Objekt an mehreren Posen detektiert werden, falls das Objekt Symmetrien aufweist. Beispielsweise wird ein um 90 Grad rotationssymmetrisches Objekt an vier unterschiedlichen Posen mit idealerweise gleichen Positionskomponenten aber unterschiedlichen Orientierungskomponenten gefunden.

Vorzugsweise wird nach dem Erkennen eines Objekts, bzw. der Bestimmung einer Posenhypothese als richtig, das Objekt unter Verwendung von SMC-Filtern verfolgt, um die Genauigkeit der Feststellung der relativen Anordnung von Sensor und Objekt auch bei einer relativen Bewegung der beiden Elemente zueinander zu erhöhen. SMC-Filter sind auch als Partikel-Filter bekannt und erlauben die genaue und kontinuierlich aktualisierte Bestimmung des Ortes und der Geschwindigkeit eines Objektes. Details zu diesen Verfahren sind z.B. dem Fachbuch "Probabilistic Robotics", The MIT Press, 2005 entnehmbar.

Die Erfindung betrifft weiter ein autonomes fahrerloses Transportsystem, umfassend ein System zur Erkennung von Objekten, welches zumindest einen Distanzsensor und eine Steuervorrichtung umfasst, die eingerichtet ist, um die oben beschriebenen Verfahren durchzuführen. Insbesondere umfassen die von der Steuervorrichtung auszuführenden Schritte ein Abrufen von Punktpaar-Features von zumindest einer 2D-Oberflächenkontur eines zu erkennenden Objekts aus einer Datenbank, wobei die Punktpaar-Features zumindest basieren auf der Distanz zwischen den beiden Punkten eines Punktepaares und der beiden Winkel der Normalen (Oberflächennormalen bzw. Kurvennormalen) jedes der Punkte zu der Distanzlinie zwischen beiden Punkten. Die Datenbank kann dabei in der Steuervorrichtung integriert sein, sie kann jedoch auch eine externe Datenbank sein, auf die die Steuervorrichtung zugreifen kann. Tatsächlich ist es sogar bevorzugt, dass die Datenbank mit den 2D-Oberflächenkonturen der CAD-Modelle eine zentrale Datenbank ist oder mit einer zentralen Datenbank synchronisiert wird, die von mehreren Systemen benutzt werden kann. Dies erleichtert das Aktualisieren oder Hinzufügen von Daten von CAD-Modellen.

Weiter ist die Steuervorrichtung eingerichtet, um zumindest eine 2D-Punktwolke der Umgebung mittels des Distanzsensors zu erfassen, und um entsprechende Punktpaar-Features der erfassten 2D-Punktwolke der Umgebung zu bilden. Die Steuervorrichtung ist weiter eingerichtet, um Punktpaar-Features der 2D-Oberflächenkontur mit den Punktpaar-Features der 2D-Punktwolke der Umgebung zu vergleichen und um ähnliche Punktpaar-Features zu bestimmen. Ein derartiger Vergleich kann auch beispielsweise auf einem separaten Rechner durchgeführt werden, auf den die Steuervorrichtung zugreift. Weiter ist die Steuervorrichtung eingerichtet, um ähnliche Modell-Punktpaar-Features bestimmen zu können und basierend auf diesen, vorzugsweise in einem Voting-Verfahren, Posenhypothesen zu bestimmen. Diese können dann vorzugsweise in einem weiteren Schritt optimiert werden und nach einer Konsistenzprüfung entweder als Detektion akzeptiert oder verworfen.

Die Verfahrensschritte, die von der Steuervorrichtung dabei durchgeführt werden, entsprechen im Wesentlichen den oben beschriebenen Verfahrensschritten, so dass auf eine erneute detaillierte Erläuterung hier verzichtet wird.

### Beschreibung der Figuren

Die vorliegende Erfindung wird exemplarisch anhand der beigefügten Figuren erläutert, in denen:
- Figur 1: eine schematische Seitenansicht eines autonomen fahrerlosen Transportsystems zeigt, welches ein erfindungsgemäßes Verfahren ausführen kann;
- Figur 2: eine Draufsicht auf die Anordnung von Figur 1 darstellt;
- Figur 3: beispielhaft die Bestimmung von Punktpaar-Features basierend auf einer 2D-Oberflächenkontur illustriert;
- Figur 4: das Bilden von Punktpaar-Features der erzeugten 2D-Oberflächenkontur eines CAD-Modells illustriert;
- Figur 5: das Bilden von entsprechenden Punktpaar-Features der erfassten 2D-Oberflächenkontur illustriert;
- Figur 6: schematisch die Vorgehensweise bei der Konsistenzprüfung anhand des Freiraummodells des Objekts illustriert;
- Figur 7: schematisch die Vorgehensweise bei der Konsistenzprüfung anhand des Freiraummodells des Sensors illustriert;
- Figur 8: schematisch die Vorgehensweise bei der Konsistenzprüfung anhand des Freiraummodells des Sensors und der Eindringtiefe eines Modellpunkts illustriert;
- Figur 9: schematisch die Vorgehensweise bei der Konsistenzprüfung anhand eines Vergleichs von erwarteten und tatsächlich beobachteten Modellpunkten illustriert; und
- Figur 10: schematisch die Vorgehensweise bei der Konsistenzprüfung anhand der beobachteten Bereiche des Objektmodells illustriert.

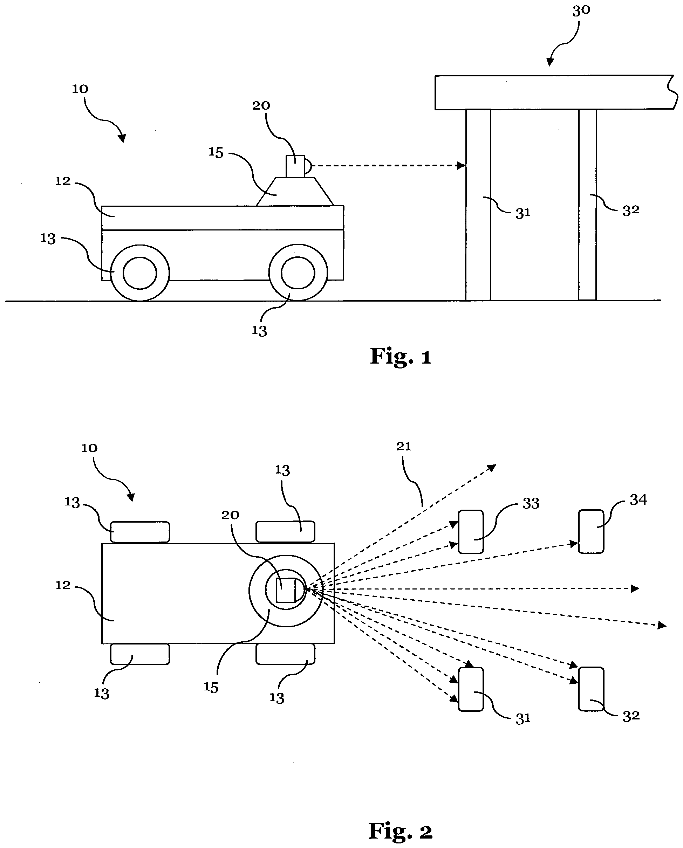

In Figur 1 ist in einer schematischen Seitenansicht ein autonomes fahrerloses Transportsystem 10 gezeigt, welches über einen Distanzsensor in Form eines 2D-Laserscanners 20 verfügt, welcher mit einer Steuereinrichtung 15 verbunden ist. Die Steuereinrichtung 15 befindet sich auf der Karosserie 12 des Transportsystems 10, welches mittels Rädern 13 bewegt werden kann. In der Umgebung des Transportsystems 10 befindet sich ein Tisch 30, der über eine Anzahl von Beinen 31, 32, 33, 34 verfügt. Das Transportsystem 10 soll beispielsweise eine bestimmte Position relativ zum Tisch 30 anfahren. Hierzu benötigt das Transportsystem 10 Informationen, die dem Transportsystem 10 eine autonome Ausrichtung zum Tisch 30 ermöglichen. Diese Informationen können mit dem erfindungsgemäßen Verfahren bereitgestellt werden.

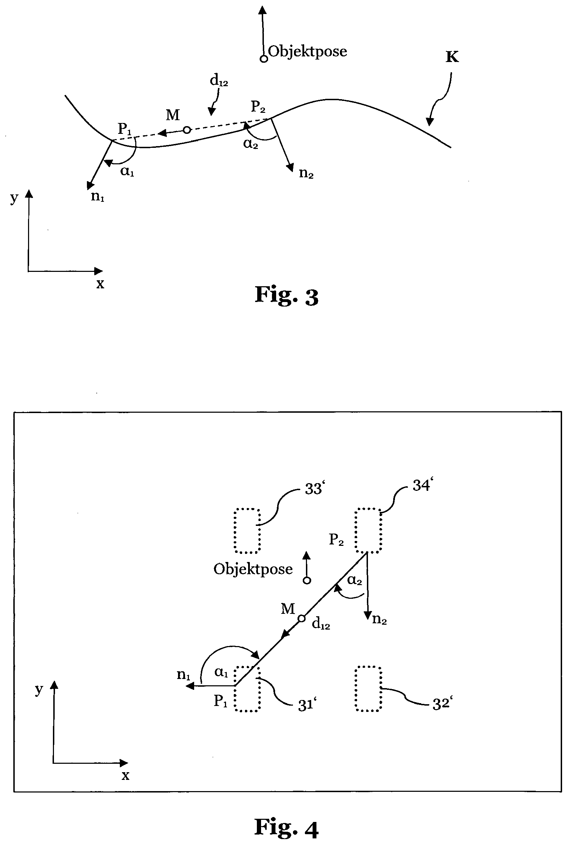

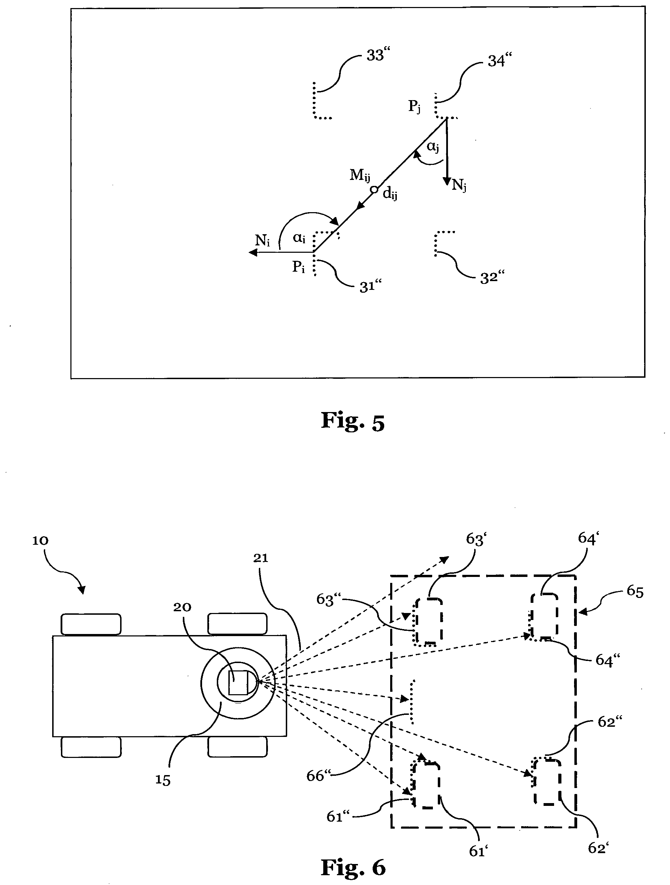

In Figur 2 ist eine Draufsicht der Anordnung von Figur 1 gezeigt. Die Tischplatte 30 des Tischs ist zur Veranschaulichung nicht dargestellt, man erkennt jedoch vier Beine 31, 32, 33 und 34. Der 2D-Laserscanner 20 des Transportsystems 10 sendet ein Fächer von Laserstrahlen 21 aus, die in Figur 2 mit gestrichelten Pfeilen 21 angedeutet sind. Wenn die Laserstrahlen 21 auf ein Objekt treffen, wie etwa die Beine des Tisches, werden die Strahlen reflektiert, und erlauben es somit dem 2D-Laserscanner 20, bzw. der zugehörigen Steuereinrichtung 15, ein zweidimensionales Abbild der Umgebung zu erzeugen, d.h. eine 2D-Punktwolke der Umgebung. Dies wird unter Bezugnahme auf die Figuren 4 und 5 unten näher erläutert.

Unter Bezugnahme auf Figur 3 soll beispielhaft das Bilden von Punktpaar-Features einer 2D-Oberflächenkontur K erläutert werden. Die 2D-Oberflächenkontur K entspricht einer zweidimensionalen Kurve und kann beispielsweise aus einem dreidimensionalen CAD-Modell generiert werden, indem ein zweidimensionaler Schnitt durch dieses CAD-Modell gelegt wird. Von dieser 2D-Oberflächenkontur werden nun zwei beliebige Punkte P₁ und P₂ ausgewählt und die Normalen n₁ und n₂ dieser beiden Punkte gebildet. Zudem wird die Distanz und die Distanzlinie d₁₂ zwischen den beiden Punkten P₁ und P₂ bestimmt. Mit diesen Daten ist es dann möglich die beiden Winkel α₁ und α₂ der Normalen n₁, n₂ der Punkte P₁ und P₂ zu der Distanzlinie d₁₂ zu ermitteln. Diese Werte des Punktepaares P₁, P₂ bilden zusammen ein Punktpaar-Feature, das heißt **f**=(d₁₂, α₁, α₂). Vorzugsweise wird zudem eine Feature-Pose definiert, in dem ein Punkt M definiert wird, der z.B. auf der Mitte der Verbindungslinie d₁₂ zwischen den Punkten des Punktpaars liegt. Zudem wird ein Richtungsvektor zwischen M und einem der Punkte des Punktpaars definiert, wie durch den von M ausgehenden durchgezogenen Pfeil in Fig. 3 und 4 gezeigt. Die Positionskomponente der Feature-Pose ergibt sich damit als der Punkt M und die Orientierungskomponente als die Orientierung des Richtungsvektors. Dies erlaubt eine eindeutige Zuordnung jedes Punktpaar-Features zur Objektpose des zu erkennenden Objekts. Wie in Fig. 3 angedeutet, kann nämlich für das so bestimmte bzw. definierte Punktpaar-Feature die Objektpose (Objektreferenzpose) des zu erkennenden Objekts relativ zur Feature-Pose definiert bzw. zugeordnet werden. Im zweidimensionalen Raum genügt hierzu der x- und y-Abstand des Punktes M von der Position der Objektpose und der Winkel zwischen den beiden Richtungsvektoren von Feature-Pose und Objektpose. Auf diese Weise wird jedes Punktpaar-Feature der 2D-Oberflächenkontur des zu erkennenden Objekts mit der jeweiligen relativen Objektpose verknüpft.

Dieser Vorgang wird für eine Vielzahl von Punktepaaren auf der 2D-Kontur K wiederholt, wie beispielsweise für einige 100 oder einige 1.000 Punktepaare. Auf diese Weise wird eine Vielzahl von Punktpaar-Features der 2D-Oberflächenkontur K gebildet, die letztendlich repräsentativ für die zweidimensionale Form der Oberflächenkontur K sind. Zudem wird jedem Punktpaar-Feature die jeweilige Objektpose zugeordnet. Wenn beispielsweise die Kontur K der 2D-Oberflächenkontur einem Schnitt durch ein dreidimensionales CAD-Modell entspricht, so bilden die derart ermittelten Punktpaar-Features eine mathematische Beschreibung des zu erkennenden Objekts, die in einer Datenbank abgespeichert werden kann.

Beim Erfassen einer 2D-Punktwolke der Umgebung mittels z.B. des 2D-Laserscanners 20 werden eine Vielzahl von Punkten der Umgebung erfasst, abhängig davon, wie viele reflektierende Oberflächen sich in der Reichweite des Distanzsensors befinden. Für diese erfasste 2D- Punktwolke der Umgebung werden ebenfalls entsprechende Punktpaar-Features gebildet, d.h. analog zu den Punktpaar-Features des zu erkennenden Objekts, die dann mit den in der Datenbank abgespeicherten Punktpaar-Features des zu erkennenden Objekts verglichen werden können.

In Figur 4 sollen die gepunkteten Rechtecke 31', 32', 33', 34' aus einem CAD-Modell des Tischs 30 erzeugt worden sein, wobei das CAD-Modell des Tischs 30 auf der Höhe der Scanebene des 2D-Laserscanner 20 zweidimensional geschnitten wurde. Hierzu wurde bspw. aus den CAD-Daten ein Objektmodell des zu erkennenden Objekts in Form einer 2D-Oberflächenkontur erzeugt, auf der dann in konfigurierbaren Abständen Punkte platziert wurden. Ein Vergleich mit Figur 2 zeigt, dass die gepunkteten Konturen 31' bis 34' den Konturen der Beine 31 bis 34 entsprechen. Die Punkte erlauben letztendlich einen Vergleich mit den tatsächlichen Sensordaten.

Hierzu werden, wie in Figur 4 angedeutet und oben unter Bezug auf Figur 3 erläutert, basierend auf der 2D-Oberflächenkontur der Tischbeine eine Vielzahl von Punktpaar-Features der Konturen 31' bis 34' gebildet. Für alle Punkte der Paare werden die Oberflächen-Normalen n₁, n₂ bestimmt und zudem die Distanz d₁₂ zwischen den beiden Punkten P₁ und P₂ des jeweiligen Punktepaares. Weiter werden dann die Winkel der Oberflächen-Normalen eines jeden Punktes zur Verbindungslinie d₁₂ zwischen den beiden Punkten P₁ und P₂ bestimmt und ein Punkt M mit zugehörigem Richtungsvektor. Ein Punktpaar-Feature besteht in diesem Beispiel mithin mindestens aus drei Werten: Der Distanz zwischen den Punkten P1 und P2 (d₁₂), und den Winkeln α₁ und α₂ der Oberflächen-Normalen eines jeden Punktes zur Verbindungslinie zwischen den Punkten. Außerdem wird mittels des Punktes M und des Richtungsvektors jedes Punktpaar-Feature der 2D-Oberflächenkontur mit der jeweiligen relativen Objektpose verknüpft. Die so erhaltenen Daten werden gespeichert.

In Figur 5 ist schematisch dargestellt, wie die 2D-Oberflächenkonturen der realen Beine 31 bis 34 des Tischs 30 durch den 2D-Laserscanner 20 in Form von 2D-Punktwolken erfasst werden. Dem Fachmann ist dabei klar, dass die Darstellung in Figur 5 eine Vereinfachung darstellt, da in der Realität der 2D-Laserscanner 20 noch viele weitere Oberflächenkonturen der Umgebung erfassen wird, wie beispielsweise die Wände in einer Werkshalle oder weitere Objekte, die nicht Teil des Tischs 30 sind. Die erfassten 2D-Punktwolken 31", 32", 33" und 34" sind nicht identisch mit den 2D-Oberflächenkonturen bzw. Modellpunktwolken 31' bis 34', die aus dem CAD-Modell abgeleitet wurden, da der Sichtbereich des 2D-Laserscanners beschränkt ist und beispielsweise nicht die Rückseiten der Beine 31 bis 34 erfassen kann. Dennoch weisen die erfassten 2D-Punktwolken 31" bis 34" eine ausreichende Ähnlichkeit mit denen aus dem CAD-Modell bestimmten 2D-Oberflächenkonturen bzw. Modellpunktwolken 31' bis 34' auf. Dies ermöglicht letztendlich ein Bestimmen, ob das zu erkennende Objekt, d.h. der "Tisch 30", erkannt wurde oder nicht. Aus den erfassten 2D-Punktwolken 31" bis 34" werden entsprechende Punktpaar-Features gebildet (um die zur Bildung der Punktpaar-Features notwendigen Werte von denen der Figur 4 zu unterscheiden, sind in Figur 5 die Werte im Index mit i und j beschriftet). Auf diese Weise erhält man eine Vielzahl von Punktpaar-Features der erfassten 2D- Punktwolken.

In einem folgenden Schritt werden die Punktpaar-Features des Modells mit den Punktpaar-Features der erfassten 2D-Punktwolken verglichen, um ähnliche Punktpaar-Features zu bestimmen. Da der 2D-Laserscanner 20 in der Praxis noch weitere Konturen als die in Figur 5 dargestellten erfasst hat, enthalten die Punktpaar-Features der erfassten 2D-Punktwolken der Umgebung eine große Anzahl an Punktpaar-Features, die von den Punktpaar-Features des Modells stark abweichen, weil beispielsweise die Distanz dᵢⱼ um ein Vielfaches größer ist, als die größtmögliche Distanz d₁₂ aus dem CAD-Modell.

Beim Bestimmen von ähnlichen Punktpaar-Features lässt sich im vorliegenden Beispiel auch zu Nutze machen, dass die Distanz d₁₂ immer in bestimmten Bereichen liegen muss. Denn entweder die beiden Punkte P₁, P₂ eines Paars befinden sich auf derselben Kontur, wie etwa beide auf der Kontur 31', oder sie befinden sich auf bzw. in unterschiedlichen Konturen. Wenn sie sich in unterschiedlichen Konturen befinden, muss die Distanz d₁₂ entweder (1.) ungefähr der Distanz der beiden Konturen 31'und 32' entsprechen, oder (2.) der Distanz der Konturen 31'und 33', oder (3.) der Konturen 31' und 34'. Mithin muss im gezeigten Beispiel die Distanz d₁₂ aller Punktpaar-Features der 2D-Oberflächenkontur des Modells in einem von vier exakt definierbaren Bereichen liegen. Punktpaar-Features der erfassten 2D-Punktwolken der Umgebung, bei denen die Distanz dᵢⱼ weit entfernt von diesen vier Bereichen ist, können als nicht-ähnlich sofort aussortiert werden.

Die Figuren 6 bis 10 illustrieren schematisch die Vorgehensweise bei der Konsistenzprüfung, also nachdem z.B. anhand der oben beschriebenen Verfahren resultierende (wahrscheinliche) Posenhypothesen bestimmt wurden. Die Konsistenzprüfung soll dazu dienen, dass Bestimmen ob das zu erkennende Objekt richtig erkannt wurde oder nicht, sicherer und zuverlässiger zu machen. Bei der Konsistenzprüfung werden vorher bestimmte Posenhypothesen getestet, um falsche Hypothesen erkennen und aussortieren zu können. Die im Folgenden näher erläuterten Konsistenzprüfungen können dabei jeweils alleine oder auch in Kombination angewandt werden. Es wird im Folgenden davon ausgegangen, dass das Objektmodell auf die Pose der jeweils gerade zu prüfenden Posenhypothese transformiert wurde (oder umgekehrt) und die Punkte der Umgebungspunktwolke mit den Punkten der transformierten 2D-Oberflächenkontur, bzw. der entsprechenden Modellpunktwolke assoziiert wurden.

Figur 6 illustriert schematisch die Vorgehensweise bei der Konsistenzprüfung anhand des Freiraummodells des Objekts. In der dargestellten Situation wird basierend auf den erfassten Laserpunkten 61", 62", 63", 64" ein Tisch mit vier Beinen an einer bestimmten Stelle vermutet (Hypothese). Die Modellpunktwolken 61', 62', 63', 64' sind wie bei dem Beispiel von Figur 4 z.B. aus einem CAD-Modell des Tischs erzeugt worden. Tatsächlich befindet sich an der Stelle ein Tisch mit sechs Beinen, so dass bei der mit Referenzzeichen 66" angezeigten Stelle weitere Punkte erfasst werden. Das Objektmodell des vermuteten 4-Bein-Tischs besteht aus den vier Modellpunktwolken 61', 62', 63', 64' der Tischbeine und das Freiraummodell des Objekts ist im gezeigten Beispiel ein Rechteck 65, welches die vier Modellpunktwolken 61', 62', 63', 64' umschließt. Innerhalb des Freiraummodells 65 dürfen keine weiteren Punkte durch den Sensor 20 erfasst werden, bzw. es wird ein Grenzwert für die Anzahl der Punkte der Umgebungswolke definiert, die sich innerhalb des Freiraummodells 65 befinden, aber nicht einer der vier Modellpunktwolken 61', 62', 63', 64' zugeordnet werden können. Die zusätzlich erfasste Punktwolke 66" wird demnach an einer Position im Freiraummodell 65 erfasst, an der eigentlich keine Punkte erfasst werden dürften. Die Posenhypothese, dass sich an der vom Sensor 20 abgetasteten Stelle ein Tisch mit vier Beinen befindet, wird daher als falsch verworfen.

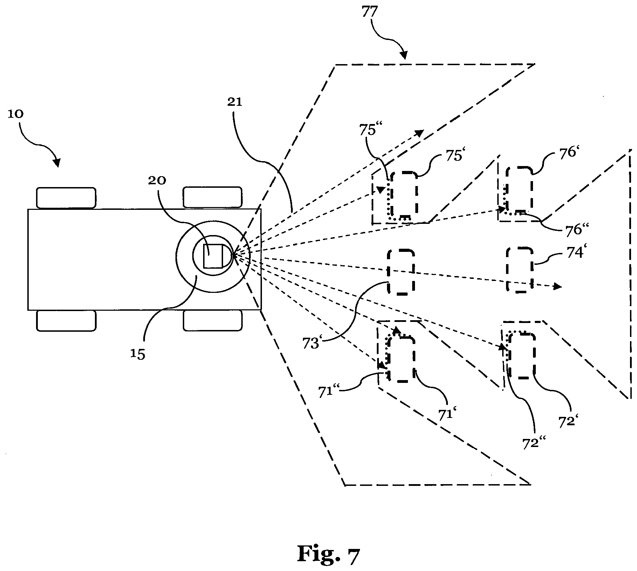

Figur 7 zeigt schematisch die Vorgehensweise bei der Konsistenzprüfung anhand des Freiraummodells des Sensors. In dieser Situation wird ein Tisch mit sechs Beinen an einer Stelle vermutet (Posenhypothese), an der tatsächlich ein Tisch mit vier Beinen steht. Die Posenhypothese ist also falsch. Der Freiraumbereich 77 des Sensors ist ein Bereich, in dem keine Umgebungspunkte erfasst/gemessen wurden. Die sechs Modellpunktwolken 71', 72', 73', 74', 75', 76' sind wiederum z.B. aus einem CAD-Modell des 6-Bein-Tischs erzeugt. 'Basierend auf den erfassten Laserpunkten 71", 72", 75", 76" wird also ein Tisch mit sechs Beinen an einer bestimmten Stelle vermutet; im Freiraummodell 77 des Sensors befinden sich jedoch Modellpunktwolken 73' und 74', die nicht mit einem Laserpunkt assoziiert werden können. Es liegen also Modelpunkte bzw. Modellpunktwolken an Stellen vor, an denen der Sensor nichts erfasst hat. Überschreitet die Anzahl dieser Modellpunkte einen bestimmten Grenzwert, wird die Posenhypothese verworfen.

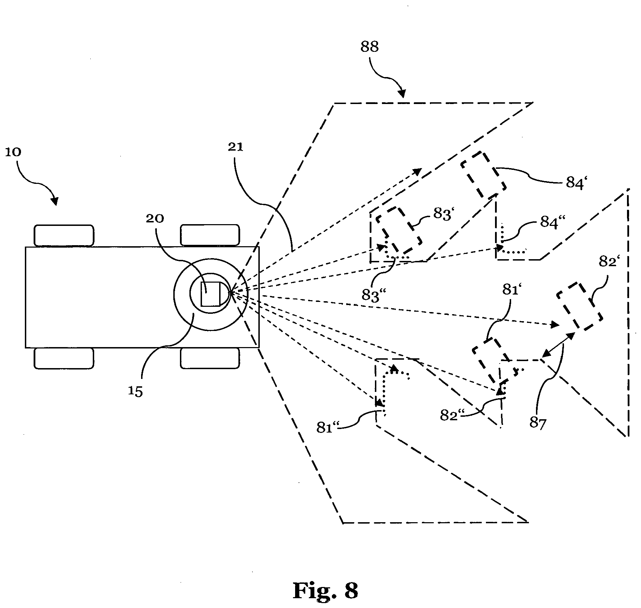

Figur 8 zeigt schematisch die Vorgehensweise bei der Konsistenzprüfung anhand des Freiraummodells des Sensors und der Eindringtiefe eines Modellpunkts. In der dargestellten Situation wird ein 4-Bein-Tisch an einer Stelle vermutet, die von der tatsächlichen Position oder Pose eines tatsächlich vorhandenen 4-Bein-Tisches abweicht. Die tatsächliche Position ist durch die erfassten Punktwolken 81", 82", 83", 84" in Figur 8 gezeigt. Die zu prüfende Posenhypothese vermutet den Tisch jedoch an der Position, die durch die Modellpunktwolken 81', 82', 83' und 84' in Figur 8 gezeigt sind. Ähnlich zu der Vorgehensweise beim Beispiel der Figur 7 werden hier Grenzwerte für Modellpunkte betrachtet, die innerhalb des Freiraummodells 88 des Sensors liegen. Maßgeblich ist aber hierbei die Distanz 87 zwischen einzelnen Modellpunkten innerhalb des Freiraummodells 88 und den Grenzen des Freiraummodels 88. Sollte die Distanz 87 einen bestimmten Grenzwert überschreiten, wird die Posenhypothese verworfen. Befinden sich die Modellpunkte jedoch z.B. nahe an der Grenze des Freiraummodels 88 kann die Posenhypothese u.U. als zutreffend angesehen werden.

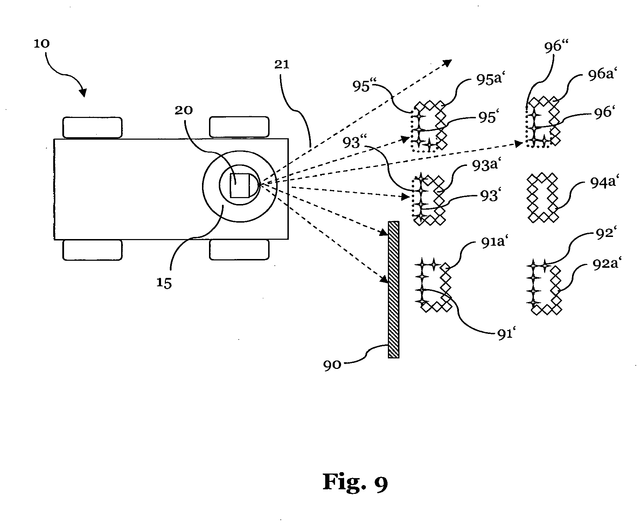

Figur 9 zeigt schematisch die Vorgehensweise bei der Konsistenzprüfung anhand eines Vergleichs von erwarteten und tatsächlich beobachteten Modellpunkten. Diese Vorgehensweise basiert auf dem Verhältnis der Anzahl der Punkte der 2D-Oberflächenkontur des zu erkennenden Objekts die eigentlich vom Distanzsensor erfasst werden müssten (erwartete Modellpunkte), zu den tatsächlich erfassten Punkten der 2D-Punktwolke der Umgebung (beobachtete Modellpunkte). Im gezeigten Beispiel wird ein 6-Bein-Tisch an einer Stelle vermutet (Posenhypothese) an der tatsächlich ein 6-Bein-Tisch vorhanden ist. Die Posenhypothese ist also zutreffend. Jedoch werden zwei Beine des Tischs durch ein Hindernis 90 verdeckt. Aus der geometrischen Berechnung lassen sich Modellpunkte 91a', 92a', 93a', 94a', 95a' und 96a' bestimmen, von denen nicht erwartet wird, dass der Sensor 20 sie erfassen kann, da sie sich z.B. vom Sensor 20 gesehen an der Rückseite eines Tischbeins befinden (wie 91a', 92a', 93a', 95a' und 96a') oder weil sie von einem anderen Tischbein verdeckt werden (wie 94a'). Außerdem werden eine Anzahl von Modellpunkten 91', 92', 93', 95' und 96' bestimmt, die eigentlich vom Sensor erfasst werden müssten. Bei 93", 95" und 96" erfasst der Sensor auch tatsächlich Punkte an Stellen, an denen dies erwartet wird. An den Stellen 91' und 92' erfasst der Sensor jedoch keine Punkte, aufgrund des Hindernisses 90, obwohl dies erwartet wird. Die Konsistenzprüfung basiert dann z.B. auf dem Verhältnis der erwarteten und tatsächlich beobachteten Modellpunkte 93", 95" und 96" zur Gesamtzahl der erwarteten Punkte.

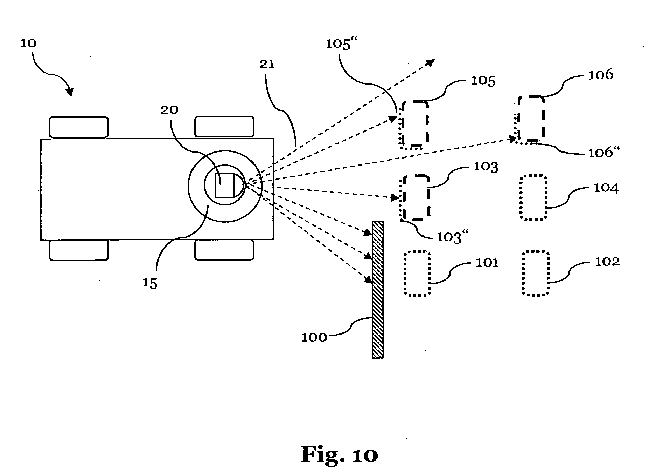

Figur 10 zeigt schematisch die Vorgehensweise bei der Konsistenzprüfung anhand der beobachteten Bereiche des Objektmodells. Im gezeigten Beispiel wird wieder ein 6-Bein-Tisch an einer Stelle vermutet (Posenhypothese) an der tatsächlich ein 6-Bein-Tisch vorhanden ist. Die Posenhypothese ist also zutreffend. Jedoch werden zwei Tischbeine durch ein Hindernis 100 verdeckt, so dass der Sensor 20 sie nicht erfassen kann und ein weiteres Bein wird nicht erfasst, da es durch ein anderes Bein verdeckt ist. Punkte werden demnach nur an den Stellen 103", 105" und 106" erfasst. Im gezeigten Beispiel wird das Objektmodell vom Benutzer in sechs rechteckige Bereiche 101, 102, 103, 104, 105, 106 eingeteilt und jedes dieser Rechtecke des Objektmodells wird als eigener Bereich aufgefasst. Bei der Erstellung der Modellpunktwolke aus dem Objektmodell wird für jeden Modellpunkt vermerkt, aus welchem Bereich er generiert wurde. Ein Bereich gilt als beobachtet, sofern mindestens ein mit ihm verknüpfter Modellpunkt ein beobachteter Modellpunkt ist, also wenn ein Punkt der erfassten 2D-Punktwolke dem Bereich zugeordnet werden kann. Im Beispiel der Fig. 10 wurden die Bereiche 103, 105 und 106 erfasst, nämlich durch die Punktwolken 103", 105" und 106", wohingegen die Bereiche 101, 102 und 104 nicht erfasst wurden. Die Posenhypothese kann beispielsweise verworfen werden, wenn ein bestimmter Grenzwert für die Anzahl der beobachteten Bereiche unterschritten wird.

### Bezugszeichenliste

- 10: Autonomes fahrerloses Transportsystem
- 12: Karosserie
- 13: Räder
- 15: Steuervorrichtung
- 20: Distanzsensor/Laserscanner
- 21: Laserstrahlen
- 30: Tisch
- 31, 32, 33, 34: Beine
- 31', 32', 33', 34': 2D-Oberflächenkontur bzw. Punktwolke aus CAD-Modell
- 31", 32", 33", 34": sensorerfasste 2D-Punktwolken
- 61', 62', 63', 64': 2D-Oberflächenkontur bzw. Punktwolke aus CAD-Modell
- 61", 62", 63", 64", 66": sensorerfasste 2D-Punktwolken
- 65: Freiraummodell des Objekts
- 71', 72', 73', 74', 75', 76': 2D-Oberflächenkontur bzw. Punktwolke aus CAD-Modell
- 71", 72", 75", 76": sensorerfasste 2D-Punktwolken der Beine
- 77: Freiraummodell des Sensors
- 81', 82', 83', 84': 2D-Oberflächenkontur bzw. Punktwolke der Beine aus CAD-Modell
- 81", 82", 83", 84": sensorerfasste 2D-Punktwolken
- 88: Freiraummodell des Sensors
- 87: Distanz Grenze Freiraummodell und Modellpunkt
- 91', 92', 93', 95', 96': Modellpunkte von denen erwartet wird, dass der Sensor sie erfassen kann
- 91a', 92a', 93a'...96a': Modellpunkte von denen nicht erwartet wird, dass der Sensor sie erfassen kann
- 93", 95", 96": erwartete und erfasste Modellpunkte
- 90, 100: Hindernis
- 101, 102, 103...106: Bereiche des Objektmodells
- 103", 105", 106": sensorerfasste 2D-Punktwolken

## Patentansprüche

1. Verfahren zum Steuern eines Roboters und/oder eines autonomen fahrerlosen Transportsystems (10), aufweisend die folgenden Schritte:
• Bereitstellen eines Objektmodells eines zu erkennenden Objekts in Form einer 2D-Oberflächenkontur;
• Bilden von Punktpaar-Features basierend auf der 2D-Oberflächenkontur, wobei die Punktpaar-Features zumindest basieren auf der Distanz (d₁₂) zwischen den beiden Punkten (P1, P₂) eines Punktpaars, und der beiden Winkel (α₁, α₂) der Normalen (n₁, n₂) jedes der Punkte (P1, P₂) zu der Distanzlinie zwischen den beiden Punkten (P1, P₂);
• Erfassen von zumindest einer 2D-Punktwolke der Umgebung mittels eines Distanzsensors (20), und Bilden von entsprechenden Punktpaar-Features der erfassten 2D-Punktwolke der Umgebung;
• Vergleich der Punktpaar-Features der 2D-Oberflächenkontur mit den Punktpaar-Features der 2D-Punktwolke der Umgebung und Bestimmen von ähnlichen Punktpaar-Features; und
• Basierend auf den als ähnlich bestimmten Punktpaar-Features: Bestimmen ob das zu erkennende Objekt (31, 32, 33, 34) erkannt wurde oder nicht, und
• Ansteuern des Roboters und/oder autonomen fahrerlosen Transportsystems (10) basierend auf dem erkannten Objekt (31, 32, 33, 34),
wobei Posenhypothesen des zu erkennenden Objekts anhand der als ähnlich bestimmten Punktpaar-Features bestimmt werden und der Schritt des Bestimmens ob das zu erkennende Objekt (31, 32, 33, 34) erkannt wurde oder nicht eine Konsistenzprüfung der Posenhypothesen umfasst;
wobei die Konsistenzprüfung einen oder mehrere der folgenden Schritte umfasst:
• Transformation des Objektmodells auf die bestimmten Posenhypothesen und Assoziieren von Punkten der Punktwolke der Umgebung mit Punkten der 2D-Oberflächenkontur, danach:
• Bestimmen der Anzahl der Punkte (66") der 2D-Punktwolke (61", 62", 66", 63", 64") der Umgebung, die sich innerhalb des Freiraummodells (65) des Objekts befinden und die nicht mit Modellpunkten assoziiert werden konnten; und/oder
• Bestimmen der Anzahl der Punkte (73', 74') der 2D-Oberflächenkontur, die sich innerhalb des Freiraummodells (77) des Sensors befinden; und/oder
• Bestimmen der Distanz (87) von Punkten (82') der 2D-Oberflächenkontur zur Grenze des Freiraummodells (88) des Sensors, für Punkte (82') der 2D-Oberflächenkontur die innerhalb des Freiraummodells (88) des Sensors liegen; und/oder
• Bestimmen des Verhältnisses der Anzahl der Punkte der 2D-Oberflächenkontur des zu erkennenden Objekts die eigentlich vom Distanzsensor erfasst werden müssten, zu den tatsächlich erfassten Punkten der 2D-Punktwolke der Umgebung; und/oder
• Einteilen des Objektmodells in verschiedene Bereiche und vermerken für jeden Modellpunkt, aus welchem Bereich er generiert wurde, und Bestimmen der Anzahl der erfassten Bereiche des Objektmodells.

2. Verfahren zum Steuern eines Roboters und/oder eines autonomen fahrerlosen Transportsystems (10) nach Anspruch 1, wobei den Punktpaar-Features der 2D-Oberflächenkontur jeweils eine Feature-Pose zugeordnet wird, welche Feature-Pose das jeweilige Punktpaar-Feature mit einer relativen Pose des zu erkennenden Objekts verknüpft.

3. Verfahren zum Steuern eines Roboters und/oder eines autonomen fahrerlosen Transportsystems (10) nach Anspruch 1 oder 2, wobei der Schritt des Vergleichs der Punktpaar-Features weiter aufweist: Bestimmen von Posenhypothesen des zu erkennenden Objekts anhand der als ähnlich bestimmten Punktpaar-Features.

4. Verfahren zum Steuern eines Roboters und/oder eines autonomen fahrerlosen Transportsystems (10) nach Anspruch 3, wobei das Bestimmen von Posenhypothesen umfasst: Transformation der Feature-Pose des Punktpaar-Features der 2D-Oberflächenkontur auf die Feature-Pose des Punktpaar-Features der 2D-Punktwolke der Umgebung.

5. Verfahren zum Steuern eines Roboters und/oder eines autonomen fahrerlosen Transportsystems (10) nach Anspruch 3 oder 4, weiter aufweisend: Eintragen der Posenhypothesen in ein Voting-Grid, welches Voting-Grid vorzugsweise als Hashtabelle realisiert ist, und Auswählen zumindest einer Posenhypothese.

6. Verfahren zum Steuern eines Roboters und/oder eines autonomen fahrerlosen Transportsystems (10) nach Anspruch 5, wobei die zumindest eine Posenhypothese aus der Grid-Zelle mit der größten Anzahl an eingetragenen Posenhypothesen ausgewählt wird.

7. Verfahren zum Steuern eines Roboters und/oder eines autonomen fahrerlosen Transportsystems (10) nach Anspruch 6, wobei das Bestimmen ob das zu erkennende Objekt erkannt wurde oder nicht auf den ausgewählten Posenhypothesen basiert und die anderen Posenhypothesen desselben Voting-Grids nicht berücksichtigt werden.

8. Verfahren zum Steuern eines Roboters und/oder eines autonomen fahrerlosen Transportsystems (10) nach einem der Ansprüche 5 bis 7, wobei die in das Voting-Grid eingetragenen Posenhypothesen auf Punktpaar-Features der 2D-Punktwolke der Umgebung basieren, die alle von genau einem Punkt ausgehen.

9. Verfahren zum Steuern eines Roboters und/oder eines autonomen fahrerlosen Transportsystems (10) nach Anspruch 8, weiter aufweisend: Bestimmen von Posenhypothesen, die auf Punktpaar-Features der 2D-Punktwolke der Umgebung basieren, die von einem anderen Punkt ausgehen, und Wiederholen des Voting-Verfahrens.

10. Verfahren zum Steuern eines Roboters und/oder eines autonomen fahrerlosen Transportsystems (10) nach einem der vorhergehenden Ansprüche, wobei der Schritt des Vergleichs der Punktpaar-Features weiter aufweist: Bestimmen von Posenhypothesen des zu erkennenden Objekts anhand der als ähnlich bestimmten Punktpaar-Features und Optimieren der bestimmten Posenhypothesen unter Verwendung eines Iterative Closest Point (IPC) Algorithmus.

11. Verfahren zum Steuern eines Roboters und/oder eines autonomen fahrerlosen Transportsystems (10) nach einem der vorhergehenden Ansprüche, wobei den Punktpaar-Features der 2D-Oberflächenkontur jeweils eine Feature-Pose zugeordnet wird, indem ein Punkt (M) auf der Verbindungslinie (d12) zwischen den beiden Punkten des Punktpaars definiert wird, sowie ein Richtungsvektor (R) ausgehend von dem Punkt (M), und der Richtungsvektor mit der relativen Pose des zu erkennenden Objekts verknüpft wird.

12. Verfahren zum Steuern eines Roboters und/oder eines autonomen fahrerlosen Transportsystems (10) nach einem der vorhergehenden Ansprüche, wobei nach dem Erkennen eines Objekts, bzw. der Bestimmung einer Posenhypothese als richtig, das erkannte Objekt unter Verwendung von SMC-Filtern verfolgt wird.

13. Autonomes fahrerlose Transportsystem (10), umfassend ein System zur Erkennung von Objekten, umfassend zumindest einen Distanzsensor (20) und eine Steuervorrichtung (15), die eingerichtet ist, um die folgenden Schritte auszuführen:
• Abrufen von Punktpaar-Features von zumindest einer 2D-Oberflächenkontur eines Objektmodells eines zu erkennenden Objekts aus einer Datenbank,
wobei die Punktpaar-Features zumindest basieren auf der Distanz (d₁₂) zwischen den beiden Punkten (P1, P₂) eines Punkt-Paars, und der beiden Winkel (α₁, α₂) der Normalen (n₁, n₂) jedes der Punkte (P1, P₂) zu der Distanzlinie zwischen den beiden Punkten;
• Erfassen von zumindest einer 2D-Punktwolke der Umgebung mittels des Distanzsensors (20), und bilden von entsprechenden Punktpaar-Features der erfassten 2D-Punktwolke der Umgebung;
• Vergleich der Punktpaar-Features der 2D-Oberflächenkontur mit den Punktpaar-Features der 2D-Punktwolke der Umgebung und Bestimmen von ähnlichen Punktpaar-Features; und
• Basierend auf den als ähnlich bestimmten Punktpaar-Features:
Bestimmen ob das zu erkennende Objekt erkannt wurde oder nicht, und
• Ansteuern des autonomen fahrerlosen Transportsystems (10) basierend auf dem erkannten Objekt (31, 32, 33, 34)
wobei die Steuervorrichtung (15) weiter eingerichtet ist, Posenhypothesen des zu erkennenden Objekts anhand der als ähnlich bestimmten Punktpaar-Features zu bestimmen und der Schritt des Bestimmens ob das zu erkennende Objekt (31, 32, 33, 34) erkannt wurde oder nicht eine Konsistenzprüfung der Posenhypothesen umfasst;
wobei die Steuervorrichtung (15) weiter eingerichtet ist, bei der Konsistenzprüfung die folgenden Schritte auszuführen:
• Transformation des Objektmodells auf die bestimmten Posenhypothesen und Assoziieren von Punkten der Punktwolke der Umgebung mit Punkten der 2D-Oberflächenkontur, danach:
• Bestimmen der Anzahl der Punkte (66") der 2D-Punktwolke (61", 62", 66", 63", 64") der Umgebung, die sich innerhalb des Freiraummodells (65) des Objekts befinden und die nicht mit Modellpunkten assoziiert werden konnten; und/oder
• Bestimmen der Anzahl der Punkte (73', 74') der 2D-Oberflächenkontur, die sich innerhalb des Freiraummodells (77) des Sensors befinden; und/oder
• Bestimmen der Distanz (87) von Punkten (82') der 2D-Oberflächenkontur zur Grenze des Freiraummodells (88) des Sensors, für Punkte (82') der 2D-Oberflächenkontur die innerhalb des Freiraummodells (88) des Sensors liegen; und/oder
• Bestimmen des Verhältnisses der Anzahl der Punkte der 2D-Oberflächenkontur des zu erkennenden Objekts die eigentlich vom Distanzsensor erfasst werden müssten, zu den tatsächlich erfassten Punkten der 2D-Punktwolke der Umgebung; und/oder
• Einteilen des Objektmodells in verschiedene Bereiche und vermerken für jeden Modellpunkt, aus welchem Bereich er generiert wurde, und Bestimmen der Anzahl der erfassten Bereiche des Objektmodells.

14. Autonomes fahrerlose Transportsystem (10) nach Anspruch 13, wobei die Steuervorrichtung (15) weiter eingerichtet ist, um die Verfahrensschritte gemäß einem der Ansprüche 2 bis 12 durchzuführen.

## Claims

1. Method for controlling a robot and/or an autonomous driverless transport system (10), comprising the following steps:
• providing an object model of an object to be recognized in the form of a 2D surface contour;
• forming point pair features based on the 2D surface contour, wherein the point pair features are based at least on the distance (d₁₂) between the two points (P₁, P₂) of a point pair, and the two angles (α₁, α₂) of the normals (n₁, n₂) of each of the points (P₁, P₂) to the distance line between the two points (P₁, P₂) ;
• acquiring at least one 2D points cloud of the environment by way of a distance sensor (20), and forming corresponding point pair features of the acquired 2D points cloud of the environment;
• comparing the point pair features of the 2D surface contour with the point pair features of the 2D points cloud of the environment and determining similar point pair features; and
• based on the point pair features determined as being similar: determining whether or not the object (31, 32, 33, 34) to be recognized has been recognized, and
• actuating the robot and/or autonomous driverless transport system (10) based on the recognized object (31, 32, 33, 34),
wherein pose hypotheses for the object to be recognized are determined on the basis of the point pair features determined as being similar, and the step of determining whether or not the object (31, 32, 33, 34) to be recognized has been recognized comprises a consistency check on the pose hypotheses;
wherein the consistency check comprises one or more of the following steps:
• transforming the object model onto the determined pose hypotheses and associating points of the points cloud of the environment with points of the 2D surface contour, and then:
• determining the number of points (66") of the 2D points cloud (61", 62", 66" 63", 64") of the environment that are located within the free space model (65) of the object and that were not able to be associated with model points; and/or
• determining the number of points (73', 74') of the 2D surface contour that are located within the free space model (77) of the sensor; and/or
• determining the distance (87) of points (82') of the 2D surface contour to the boundary of the free space model (88) of the sensor, for points (82') of the 2D surface contour that lie within the free space model (88) of the sensor; and/or
• determining the ratio of the number of points of the 2D surface contour of the object to be recognized and that would actually have to be acquired by the distance sensor to the actually acquired points of the 2D points cloud of the environment; and/or
• dividing the object model into different regions and observing, for each model point, the region from which it was generated, and determining the number of acquired regions of the object model.

2. Method for controlling a robot and/or an autonomous driverless transport system (10) according to Claim 1, wherein the point pair features of the 2D surface contour are each assigned a feature pose, which feature pose links the respective point pair feature to a relative pose of the object to be recognized.

3. Method for controlling a robot and/or an autonomous driverless transport system (10) according to Claim 1 or 2, wherein the step of comparing the point pair features furthermore comprises: determining pose hypotheses for the object to be recognized on the basis of the point pair features determined as being similar.

4. Method for controlling a robot and/or an autonomous driverless transport system (10) according to Claim 3, wherein determining pose hypotheses comprises: transforming the feature pose of the point pair feature of the 2D surface contour onto the feature pose of the point pair feature of the 2D points cloud of the environment.

5. Method for controlling a robot and/or an autonomous driverless transport system (10) according to Claim 3 or 4, furthermore comprising: entering the pose hypotheses into a voting grid, which voting grid is preferably implemented in the form of a hash table, and selecting at least one pose hypothesis.

6. Method for controlling a robot and/or an autonomous driverless transport system (10) according to Claim 5, wherein the at least one pose hypothesis is selected from the grid cell containing the greatest number of entered pose hypotheses.

7. Method for controlling a robot and/or an autonomous driverless transport system (10) according to Claim 6, wherein the determination as to whether or not the object to be recognized has been recognized is based on the selected pose hypotheses, and the other pose hypotheses in the same voting grid are not taken into consideration.

8. Method for controlling a robot and/or an autonomous driverless transport system (10) according to one of Claims 5 to 7, wherein the pose hypotheses entered into the voting grid are based on point pair features of the 2D points cloud of the environment that all emanate from exactly one point.

9. Method for controlling a robot and/or an autonomous driverless transport system (10) according to Claim 8, furthermore comprising: determining pose hypotheses that are based on point pair features of the 2D points cloud of the environment that emanate from another point, and repeating the voting method.

10. Method for controlling a robot and/or an autonomous driverless transport system (10) according to one of the preceding claims, wherein the step of comparing the point pair features furthermore comprises: determining pose hypotheses of the object to be recognized on the basis of the point pair features determined as being similar and optimizing the determined pose hypotheses using an iterative closest point (IPC) algorithm.

11. Method for controlling a robot and/or an autonomous driverless transport system (10) according to one of the preceding claims, wherein the point pair features of the 2D surface contour are each assigned a feature pose by defining a point (M) on the connecting line (d12) between the two points of the point pair, and linking a direction vector (R) emanating from the point (M) and the direction vector with the relative pose of the object to be recognized.

12. Method for controlling a robot and/or an autonomous driverless transport system (10) according to one of the preceding claims, wherein, after an object has been recognized or a pose hypothesis has been determined as being correct, the recognized object is tracked using SMC filters.

13. Autonomous driverless transport system (10), comprising a system for recognizing objects, comprising at least one distance sensor (20) and a control device (15) that is configured so as to carry out the following steps:
• retrieving point pair features of at least one 2D surface contour of an object model of an object to be recognized from a database, wherein the point pair features are based at least on the distance (d₁₂) between the two points (P₁, P₂) of a point pair, and the two angles (α₁, α₂) of the normals (n₁, n₂) of each of the points (P₁, P₂) to the distance line between the two points;
• acquiring at least one 2D points cloud of the environment by way of the distance sensor (20), and forming corresponding point pair features of the acquired 2D points cloud of the environment;
• comparing the point pair features of the 2D surface contour with the point pair features of the 2D points cloud of the environment and determining similar point pair features; and
• based on the point pair features determined as being similar: determining whether or not the object to be recognized has been recognized, and
• actuating the autonomous driverless transport system (10) based on the recognized object (31, 32, 33, 34),
wherein the control device (15) is furthermore configured so as to determine pose hypotheses for the object to be recognized on the basis of the point pair features determined as being similar, and the step of determining whether or not the object (31, 32, 33, 34) to be recognized has been recognized comprises a consistency check on the pose hypotheses;
wherein the control device (15) is furthermore configured so as to carry out the following steps in the consistency check:
• transforming the object model onto the determined pose hypotheses and associating points of the points cloud of the environment with points of the 2D surface contour, and then:
• determining the number of points (66") of the 2D points cloud (61", 62", 66" 63", 64") of the environment that are located within the free space model (65) of the object and that were not able to be associated with model points; and/or
• determining the number of points (73', 74') of the 2D surface contour that are located within the free space model (77) of the sensor; and/or
• determining the distance (87) of points (82') of the 2D surface contour to the boundary of the free space model (88) of the sensor, for points (82') of the 2D surface contour that lie within the free space model (88) of the sensor; and/or
• determining the ratio of the number of points of the 2D surface contour of the object to be recognized and that would actually have to be acquired by the distance sensor to the actually acquired points of the 2D points cloud of the environment; and/or
• dividing the object model into different regions and observing, for each model point, the region from which it was generated, and determining the number of acquired regions of the object model.

14. Autonomous driverless transport system (10) according to Claim 13, wherein the control device (15) is furthermore configured so as to perform the method steps according to one of Claims 2 to 12.

## Revendications

1. Procédé pour commander un robot et/ou un système de transport (10) autonome sans conducteur, comprenant les étapes suivantes :
• fourniture d'un modèle d'objet d'un objet à reconnaître sous la forme d'un contour de surface 2D ;
• formation de caractéristiques de paire de points en se basant sur le contour de surface 2D, les caractéristiques de paire de points se basant au moins sur la distance (d₁₂) entre les deux points (P1, P₂) d'une paire de points et les deux angles (α₁, α₂) entre les normales (n₁, n₂) à chacun des points (P1, P₂) et la ligne de distance entre les deux points (P1, P₂) ;
• acquisition d'au moins un nuage de points 2D de l'environnement au moyen d'un capteur de distance (20) et formation de caractéristiques de paire de points correspondantes du nuage de points 2D acquis de l'environnement ;
• comparaison des caractéristiques de paire de points du contour de surface 2D avec les caractéristiques de paire de points correspondantes du nuage de points 2D de l'environnement et détermination de caractéristiques de paire de points similaires ;
et
• en se basant sur les caractéristiques de paire de points déterminées comme étant similaires : détermination si l'objet (31, 32, 33, 34) à reconnaître a été reconnu ou non, et
• commande du robot et/ou du système de transport (10) autonome sans conducteur en se basant sur l'objet (31, 32, 33, 34) reconnu,
des hypothèses de posture de l'objet à reconnaître étant déterminées à l'aide des caractéristiques de paire de points déterminées comme étant similaires et l'étape de détermination si l'objet (31, 32, 33, 34) à reconnaître a été reconnu ou non comportant un contrôle de cohérence des hypothèses de posture ;
le contrôle de cohérence comprenant une ou plusieurs des étapes suivantes :
• transformation du modèle d'objet en les hypothèses de posture déterminées et association des points du nuage de points de l'environnement à des points du contour de surface 2D, ensuite :
• détermination du nombre de points (66") du nuage de points 2D (61", 62", 66", 63", 64") de l'environnement qui se trouvent à l'intérieur du modèle d'espace libre (65) de l'objet et qui n'ont pas pu être associés aux points de modèle ; et/ou
• détermination du nombre de points (73', 74') du contour de surface 2D qui se trouvent à l'intérieur du modèle d'espace libre (77) du capteur ; et/ou
• détermination de la distance (87) entre les points (82') du contour de surface 2D et la limite du modèle d'espace libre (88) du capteur, pour les points (82') du contour de surface 2D qui se trouvent à l'intérieur de la limite du modèle d'espace libre (88) du capteur ; et/ou
• détermination du rapport entre le nombre de points du contour de surface 2D de l'objet à reconnaître qui auraient vraiment dû être détectés par le capteur de distance et les points réellement détectés du nuage de points 2D de l'environnement ; et/ou
• division du modèle d'objet en différentes zones et annotation, pour chaque point de modèle, de la zone à partir de laquelle il a été généré, et détermination du nombre de zones détectées du modèle d'objet.

2. Procédé pour commander un robot et/ou un système de transport (10) autonome sans conducteur selon la revendication 1, une posture de caractéristique étant respectivement associée aux caractéristiques de paire de points du contour de surface 2D, laquelle posture de caractéristique combinant la caractéristique de paire de points respective avec une posture relative de l'objet à reconnaître.

3. Procédé pour commander un robot et/ou un système de transport (10) autonome sans conducteur selon la revendication 1 ou 2, l'étape de comparaison des caractéristiques de paire de points comprenant en outre : détermination d'hypothèses de posture de l'objet à reconnaître à l'aide des caractéristiques de paire de points déterminées comme étant similaires.

4. Procédé pour commander un robot et/ou un système de transport (10) autonome sans conducteur selon la revendication 3, la détermination d'hypothèses de posture comprenant : la transformation de la posture de caractéristique de la caractéristique de paire de points du contour de surface 2D en la posture de caractéristique de la caractéristique de paire de points du nuage de points 2D de l'environnement.

5. Procédé pour commander un robot et/ou un système de transport (10) autonome sans conducteur selon la revendication 3 ou 4, comprenant en outre : l'inscription des hypothèses de posture dans une grille de vote, ladite grille de vote étant de préférence réalisée sous la forme d'une table de hachage, et la sélection d'au moins une hypothèse de posture.

6. Procédé pour commander un robot et/ou un système de transport (10) autonome sans conducteur selon la revendication 5, l'au moins une hypothèse de posture étant sélectionnée à partir de la cellule de grille ayant le plus grand nombre d'hypothèses de posture inscrites.

7. Procédé pour commander un robot et/ou un système de transport (10) autonome sans conducteur selon la revendication 6, la détermination si l'objet à reconnaître a été reconnu ou non se basant sur les hypothèses de posture sélectionnées et les autres hypothèses de posture de la même grille de vote n'étant pas prises en compte.

8. Procédé pour commander un robot et/ou un système de transport (10) autonome sans conducteur selon l'une des revendications 5 à 7, les hypothèses de posture inscrites dans la grille de vote se basant sur des caractéristiques de paire de points du nuage de points 2D de l'environnement qui émanent toutes d'exactement un point.

9. Procédé pour commander un robot et/ou un système de transport (10) autonome sans conducteur selon la revendication 8, comprenant en outre : la détermination d'hypothèses de posture qui se basent sur des caractéristiques de paire de points du nuage de points 2D de l'environnement qui émanent d'un autre point, et la répétition du procédé de vote.

10. Procédé pour commander un robot et/ou un système de transport (10) autonome sans conducteur selon l'une des revendications précédentes, l'étape de la comparaison des caractéristiques de paire de points comprenant en outre : la détermination d'hypothèses de posture de l'objet à reconnaître à l'aide des caractéristiques de paire de points déterminées comme étant similaires et l'optimisation des hypothèses de posture déterminées en utilisant un algorithme du point itératif le plus proche (IPC).

11. Procédé pour commander un robot et/ou un système de transport (10) autonome sans conducteur selon l'une des revendications précédentes, aux caractéristiques de paire de points du contour de surface 2D étant respectivement associée une posture de caractéristique, en définissant un point (M) sur une ligne de liaison (d12) entre les deux points de la paire de points, ainsi qu'un vecteur de direction (R) partant du point (M), et le vecteur de direction étant combiné avec la posture relative de l'objet à reconnaître.

12. Procédé pour commander un robot et/ou un système de transport (10) autonome sans conducteur selon l'une des revendications précédentes, un objet reconnu, après la reconnaissance de l'objet ou la détermination d'une hypothèse de posture comme étant juste, étant suivi en utilisant des filtres SMC.

13. Système de transport (10) autonome sans conducteur comprenant un système de reconnaissance d'objet, comprenant au moins un capteur de distance (20) et un dispositif de commande (15), qui est conçu pour exécuter les étapes suivantes :
• invocation de caractéristiques de paire de points d'au moins un contour de surface 2D d'un modèle d'objet d'un objet à reconnaître à partir d'une base de données, les caractéristiques de paire de points se basant au moins sur la distance (d₁₂) entre les deux points (P1, P₂) d'une paire de points et les deux angles (α₁, α₂) entre les normales (n₁, n₂) à chacun des points (P1, P₂) et la ligne de distance entre les deux points ;
• acquisition d'au moins un nuage de points 2D de l'environnement au moyen du capteur de distance (20) et formation de caractéristiques de paire de points correspondantes du nuage de points 2D acquis de l'environnement ;
• comparaison des caractéristiques de paire de points du contour de surface 2D avec les caractéristiques de paire de points correspondantes du nuage de points 2D de l'environnement et détermination de caractéristiques de paire de points similaires ;
et
• en se basant sur les caractéristiques de paire de points déterminées comme étant similaires : détermination si l'objet à reconnaître a été reconnu ou non, et
• commande du système de transport (10) autonome sans conducteur en se basant sur l'objet (31, 32, 33, 34) reconnu,
le dispositif de commande (15) étant en outre conçu pour déterminer des hypothèses de posture de l'objet à reconnaître à l'aide des caractéristiques de paire de points déterminées comme étant similaires et l'étape de détermination si l'objet (31, 32, 33, 34) à reconnaître a été reconnu ou non comportant un contrôle de cohérence des hypothèses de posture ;
le dispositif de commande (15) étant en outre conçu pour, lors du contrôle de cohérence exécuter les étapes suivantes :
• transformation du modèle d'objet en les hypothèses de posture déterminées et association des points du nuage de points de l'environnement à des points du contour de surface 2D, ensuite :
• détermination du nombre de points (66") du nuage de points 2D (61", 62", 66", 63", 64") de l'environnement qui se trouvent à l'intérieur du modèle d'espace libre (65) de l'objet et qui n'ont pas pu être associés aux points de modèle ; et/ou
• détermination du nombre de points (73', 74') du contour de surface 2D qui se trouvent à l'intérieur du modèle d'espace libre (77) du capteur ; et/ou
• détermination de la distance (87) entre les points (82') du contour de surface 2D et la limite du modèle d'espace libre (88) du capteur, pour les points (82') du contour de surface 2D qui se trouvent à l'intérieur de la limite du modèle d'espace libre (88) du capteur ; et/ou
• détermination du rapport entre le nombre de points du contour de surface 2D de l'objet à reconnaître qui auraient vraiment dû être détectés par le capteur de distance et les points réellement détectés du nuage de points 2D de l'environnement ; et/ou
• division du modèle d'objet en différentes zones et annotation, pour chaque point de modèle, de la zone à partir de laquelle il a été généré, et détermination du nombre de zones détectées du modèle d'objet.

14. Système de transport (10) autonome sans conducteur selon la revendication 13, le dispositif de commande (15) étant en outre conçu pour exécuter les étapes du procédé selon l'une des revendications 2 à 12.
